(19) Europäisches Patentamt
European Patent Office
Office européen des brevets

(11) EP 0 938 015 B1

(12) EUROPEAN PATENT SPECIFICATION

(45) Date of publication and mention of the grant of the patent:
**11.08.2004 Bulletin 2004/33**

(51) Int Cl.[7]: **G02C 5/14**, G02C 5/22, G02C 1/02

(21) Application number: **99301262.4**

(22) Date of filing: **22.02.1999**

(54) **Eyeglasses**

Brillen

Lunettes

(84) Designated Contracting States:
**DE FR IT**

(30) Priority: **23.02.1998 JP 4068198**

(43) Date of publication of application:
**25.08.1999 Bulletin 1999/34**

(73) Proprietor: **YAMAMOTO KOGAKU CO., LTD.**
**Higashiosaka-shi, Osaka-fu (JP)**

(72) Inventor: **Masuda, Noriyuki**
**Higashiosaka-shi, Osaka (JP)**

(74) Representative: **Paget, Hugh Charles Edward et al**
**Mewburn Ellis LLP**
**York House**
**23 Kingsway**
**London WC2B 6HP (GB)**

(56) References cited:
**WO-A-96/13236**
**DE-A- 4 431 328**
**FR-A- 2 634 909**
**WO-A-98/54613**
**DE-U- 8 714 800**
**FR-A- 2 686 710**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 938 015 B1

## Description

The present invention relates to eyeglasses used as, for example, sunglasses and goggles, etc.

A pair of eyeglasses which has been conventionally used consists of a main body 30 (single-lens structure) and a pair of left and right side temples 32 attached to the main body 30 through frames 31 fixed to left and right side upper ends of the main body 30 as shown in FIG. 10. In the conventional eyeglasses of this type, the lens is desirably curved sharply so as to prevent the suck of wind or light from entering from the sides when used in various sporting events such as a bicycle event.

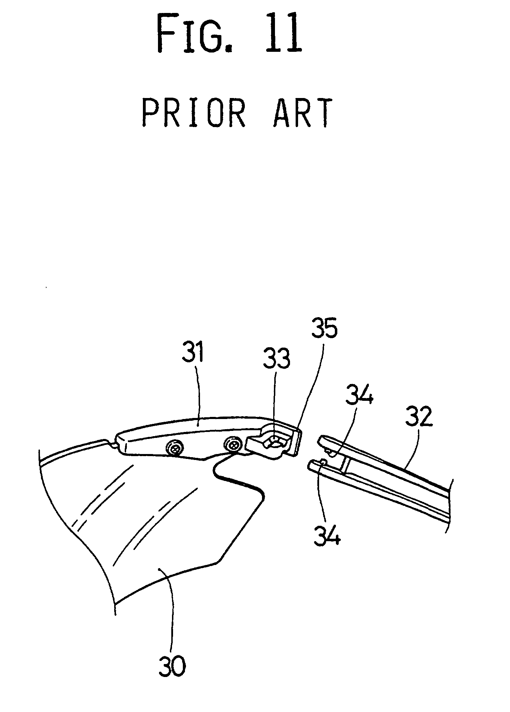

However, according to the conventional eyeglasses of this type, as shown in FIG. 11, engagement shaft holes 33 are provided at the frames 31 and protrusions 34 provided at forked front end portions of the temples 32 are engaged with the shaft holes 33. Due to this, the temple 32 contacts with the outer end 35 of the frame 31 to prevent the temple 32 from further rotating outward. As a result, if the temple 32 is forced to be opened further, the main body 30 is disadvantageously deformed and its original curved-shape is damaged. In addition, if the eyeglass main body 30 is curved more sharply, the opening angle of the temple 32 becomes narrower accordingly. As a result, the temple 32 disadvantageously pinches the head of a user and the eyeglasses become uncomfortable to wear.

Under the circumstances, according to the conventional eyeglasses, the sphere of the main body 30 is normally about 6 curves and it has been difficult to merchandize ones having a sphere curved more sharply. By the 6-curve sphere, it means a sphere having a radius of curvature R1 (mm) thereof (or front surface) set at:

$$R1=(N-1) \times 100/D \ [D=6]$$

where N is the index of refraction of material.

WO96 13236A discloses eyeglasses according to the precharacterising section of claim 1.

It would be desirable to provide a pair of eyeglasses which can maintain the curve of the eyeglass main body even if a temple or temples are opened excessively, and in which the temple or temples do not pinch the head of a user otherwise to make the eyeglasses uncomfortable to wear even if the eyeglass main body is curved more sharply.

According to the present invention there is provided eyeglasses comprising an eyeglass main body, a pair of left and right temples, and a pair of temple attachment members, characterised in that each of said temple attachment members is of generally V-shape with one part of the V-shape being fixedly attached to the eyeglass main body and the other part of the V-shape having attached thereto one end of an associated temple, the other part of the V-shape being rockable relative to the one part in a substantially horizontal direction towards the front of the eyeglass main body.

The temple attachment members may be provided on an upper front surface of each of left and right side portions of the main body.

The eyeglass main body may be a single-lens structure.

A hook may be provided to hook the other part of the temple attachment member to the eyeglass main body to thereby prevent the other part from being opened beyond a certain level.

Practical embodiments of the present invention will now be described with reference to the accompanying drawings, in which:

FIG. 1 is a perspective front view of one embodiment of eyeglasses according to the present invention;

FIG. 2 is a plan view of the embodiment of eyeglasses according to the present invention;

FIG. 3 is a bottom view of the embodiment of eyeglasses according to the present invention;

FIG. 4 is a perspective front view of an eyeglass main body in the embodiment of eyeglasses according to the present invention;

FIG. 5 is a bottom view of a right-side temple attachment member in the embodiment of eyeglasses according to the present invention;

FIG. 6 is a perspective view of the right-side temple attachment member in the embodiment of eyeglasses according to the present invention;

FIG. 7 is a partially enlarged perspective view of the embodiment of eyeglasses according to the present invention;

FIG. 8 is a perspective view of the right-side temple in the embodiment of eyeglasses according to the present invention;

FIG. 9 is a side view of a nose pad member in the embodiment of eyeglasses according to the present invention;

FIG. 10 is a plan view of conventional eyeglasses;

FIG. 11 is a partially enlarged perspective view of the conventional eyeglasses.

Eyeglasses according to the present invention comprise a pair of left and right temples 3 attached to the left and right side portions of an eyeglass main body 1 through temple attachment members 2, respectively. The temple attachment member 2 is fork-shaped and consists of a fixed part 2a fixedly attached to the main body 1 and a rocking part 2b to which the temple 3 is attached.

FIG. 1 is a front view of eyeglasses in one embodiment according to the present invention, FIG. 2 is a plan view thereof and FIG. 3 is a bottom view thereof. The eyeglasses in this embodiment are intended for sports eyeglasses.

The eyeglass main body 1 can be a flexible, elastic a single-lens structure provided with a spherical surface of, for example, 6.75 curves. The main body 1 (or single-lens main body) is desirably made of impact-resistant plastics such as polycarbonate and ABS (acrylonitrile-butadiene-styrene) resin.

As shown in FIG. 4, the first notch 4 and the second notch 5 are formed continuously and outward at each of the upper end portions on the left and right sides of the eyeglass main body 1 to thereby provide a two-step shape inclined downward. Two screw holes 6 are provided in the neighbourhood of the first notch 4 to allow the temple attachment member 2 to be fixed by screws 7 from within. A cut 8 is provided laterally on the outer end portion of the shoulder 41. An approximately V-shaped cut nose pad member attachment part 9 is formed at the lower central portion of the main body 1, to which attachment part 9 a nose pad 10 is attached.

The temple attachment member 2 is approximately V-shaped and consists of a relatively short fixed part 2a and a longer rocking part 2b. The temple attachment member 2 is positioned on the upper front portion of each of the left and right side portions of the main body 1. The rocking part 2b can be rocked horizontally in front of the main body 1. The temple attachment member 2 is provided in a space given by the first notch 4, thereby preventing the member 2 from protruding upward with respect to the upper end periphery at the center of the main body 1.

The temple attachment member 2 can be made of a flexible material such as nylon resin and consists of a fixed part 2 and a rocking part 2b which are integral of each other. It is also possible to independently form the fixed part 2a and the rocking part 2b both made of an inflexible material and to couple the fixed part 2a to the rocking part 2b by a flexible member.

A fitting groove 11 is provided on the lower surface of the fixed part 2a of the temple attachment member 2 to be fitted into the main body 1 as shown in FIG. 5. Further as shown in FIG. 6, two screw holes 12 leading to the fitting groove 11 are provided on the outer side surface of the fixed part 2a. The temple attachment member 2 is fixedly attached to the main body 1 by fitting the fitting groove 11 into an area, in which the screw holes 6 are provided, and screwing screws 7 into the screw holes 12 of the fixed part 2a and the screw holes 6 of the main body 1, respectively.

The rocking part 2b is arc-shaped so that the main body 1 continues to the temple 3 to provide a natural curve. While no external force is applied to the rocking part 2b, the neighbourhood of the joint of the rocking part 2b is expanded slightly forward and the outer end portion thereof is bent to reach into the second notch 5 of the main body 1. The rocking part 2b has an inner surface 13 curved more sharply than the outer surface 14 and is gradually thicker from the joint toward the outer end portion.

Further, a hook 15 is provided on the inner side surface 13 of the rocking part 2b in such a manner that the hook 15 protrudes to be fitted into the cut 8 of the main body 1. The tip end portion 15a of the hook 15 is made larger than the width of the cut 8. As shown in FIG. 7, the tip end portion 15a is hooked to the main body 1 to thereby prevent the rocking part 2b from opening beyond a certain level. The hook 15, thus, serves to prevent the rocking part 2b from excessively opening thereby to prevent the deformation of the main body 1.

The temple attachment part 16 is provided on the outer end portion of the rocking part 2b to rotatably attach the temple 3. The temple attachment part 16 is positioned in the vicinity of the second notch 5 of the main body 1.

Desirably, the temple 3 is made of the same material as that of the temple attachment member 2 and, as shown in FIG. 8, is flexible, resilient and arc-shaped as a whole to be fitted to the head of a user. A notch 17 is formed on the outer front end portion of the temple 3. The front end portion of the temple 3 has a forked-shape consisting of an upper end 18 and a lower end 19, and a shaft 20 having a circular section is provided between the upper end 18 and the lower end 19. In addition, protrusions 21 are provided on the upper and lower ends 18 and 19 by forming each of them in such a shape that two semi-circularly shaped portions with the out side one being slightly shifted forward.

Further, the temple 3 is provided with a non-slip attachment hole which is elongated from approximately centre of the temple toward its free end and passes the temple 3 laterally. Non-slip members 22 made of elastic material such as rubber and having protrusions on the surfaces thereof are fitted into the non-slip attachment hole.

As shown in FIG. 5, a rotation groove 23 is provided in and vertically passes through the temple attachment part 16 of the rocking part 2b to rotatably fit the shaft 20 of the temple 3 into the groove 23. The periphery of the rotation groove 23 is stepped down on the upper and lower surfaces of the rocking part 2b and a portion in the vicinity of the inner side surface 13 of the surrounding wall is protruded inward, thereby providing a detent 24 for hooking the protrusions 21 on the front end portion of the temple 3.

Since the temple 3 is attached to the rocking part 2b by fitting the shaft 20 of the temple 3 into the rotation groove 23, the overall structure is highly resistant to wear and torsion and the temple 3 does not easily come off the rocking part 2b. Further, the shoulder portion 25 on the front end of the temple 3 is formed to contact with the outer end face 26 of the rocking part 2b at the same time when the protrusions 21 come to hook the detent 24, thereby it is possible to attach the temple 3 to the rocking part 2b without providing an excess looseness.

The nose pad member 10 is formed by integrating a retaining part 10a which is approximately V-shaped if seen from the front, into a nose pad part 10b formed along the shape of a nose. As shown in the side view of FIG. 9, a tightening groove 27 is provided on the upper peripheral surface of the retaining part 10a. With the tightening groove 27, the nose pad member 10 is tight attached to the nose pad member attachment part 9 of the main body 1. An elongated hole 28 is provided laterally at the upper central portion of the nose pad part 10b and a plurality of small holes 29 which are long back-and-forth are provided on both sides of the nose pad part 10b.

The nose pad member 10 is preferably made of relatively hard material such as plastics rather than soft material such as rubber to ensures that the tightening groove 27 is tight attached to the nose pad member attachment part 9. With the above-stated structure of the nose pad member 10, the nose pad part 10b is flexible enough to gently contact with and fit to the nose even if the member 10 is made of relatively hard material.

Moreover, the tightening groove 27 may be fixedly attached to the nose pad member attachment part 9 by adhesive. Alternatively, the nose pad member 10 may be made of an elastic material and the retaining part 10a is formed into approximately V-shape having an wider angle than that of the nose pad member attachment part 9 to thereby press-contact the retaining part 10a with the nose pad member attachment part 9.

The eyeglass structure described above has a pair of left and right temples 3 attached to the main body 1 through the temple attachment members 2, respectively. Due to this, even if the angle of the temple 3 is wider, the main body 1 is hardly deformed and the original curve of the main body 1 can be maintained.

Specifically, if the temple 3 is opened outward, the protrusions 21 is engaged with the detent 24 and the shoulder portion 25 contacts with the outer end face 26 of the rocking part 2b to thereby limit the rotation of the temple 3. A force to open the temple 3 outward is applied to open the rocking part 2b of the temple attachment member 2 but not directly applied to the main body 1. The temple 3 rotates around the joint of the rocking part 2b positioned forward with respect to the shaft 20 on the front end portion of the temple 3. Due to this, it does not occur that the angles of the left and right temples 3 become unnecessarily wider and that the back end portions thereof are apart from the head of the user completely. The back end portions gently contact with the head and well fit thereto.

Therefore, even if the main body 1 has 6 curves or more, the temples 3 can be opened wide without deforming the main body 1 and maintaining the curve of the main body 1. Besides, since the temples 3 can fit to the head without pinching it, the eyeglasses are considerably comfortable to wear even for a user having a head of large dimensions.

It is noted that the present invention should not be limited to the above-stated embodiment and that the design can be modified as required. For instance, the present invention may be two-lens structure eyeglasses, goggles and sunglasses of various types.

The eyeglasses according to the present invention have a structure as stated so far. With the structure, the temple attachment member 2 is provided between the main body 1 and the temple 3. Owing to this, when the temple 3 is opened, it is possible to keep the original curve of the main body 1 without applying a bending force directly to the main body 1. In addition, even if the main body 1 is sharply curved, the temples 3 gently contact with the head and the eyeglasses are, therefore, comfortable to wear.

## Claims

1. Eyeglasses comprising an eyeglass main body (1), a pair of left and right temples (3), and a pair of temple attachment members (2), **characterised in that** each of said temple attachment members (2) is of generally V-shape with one part (2a) of the V-shape being fixedly attached to the eyeglass main body (1) and the other part (2b) of the V-shape having attached thereto one end of an associated temple (3), the other part (2b) of the V-shape being rockable relative to the one part (2a) in a substantially horizontal direction towards the front of the eyeglass main body (1).

2. Eyeglasses according to claim 1, wherein said temple attachment members (2) are provided one on an upper front surface of each of left and right side portions of the main body (1).

3. Eyeglasses according to claim 1 or claim 2, wherein said eyeglass main body (1) has a single-lens structure.

4. Eyeglasses according to any one of claims 1 to 3, wherein said other part (2b) of each temple attachment member (2) is provided with a hook (15) to hook to the eyeglass main body (1), thereby to prevent said other part (2b) from being opened beyond a certain level.

## Patentansprüche

1. Brille umfassend einen Brillenglas-Hauptkörper (1), ein Paar linker und rechter Bügel (3) sowie ein Paar an Bügelbefestigungselementen (2), **dadurch gekennzeichnet, dass** jedes der Bügelbefestigungselemente (2) eine im Allgemeinen V-förmige Gestalt aufweist, wobei ein Teil (2a) der V-förmigen Gestalt fix am Brillenglas-Hauptkörper (1) befestigt ist und am anderen Teil (2b) der V-förmigen Gestalt ein Ende eines zugeordneten Bügels (3) angebracht ist, wobei der andere Teil (2b) der V-förmigen Gestalt in Bezug auf den einen Teil (2a) in eine im Wesentlichen horizontale Richtung zur Vorderseite des Brillenglas-Hauptkörpers (1) schwenkbar ist.

**2.** Brille nach Anspruch 1, worin die Bügelbefestigungselemente (2) auf einer oberen Vorderfläche jedes der linksseitigen und rechtsseitigen Abschnitte des Hauptkörpers (1) bereitgestellt sind.

**3.** Brille nach Anspruch 1 oder 2, worin der Brillenglas-Hauptkörper (1) eine Einfachlinsen-Struktur aufweist.

**4.** Brille nach einem der Ansprüche 1 bis 3, worin der andere Teil (2b) jedes Bügelbefestigungselements (2) mit einem Haken (15) ausgestattet ist, um am Brillenglas-Hauptkörper (1) befestigt zu werden, wodurch verhindert wird, dass der andere Teil (2b) über ein gewisses Ausmaß hinaus geöffnet wird.

**Revendications**

**1.** Lunettes comprenant un corps principal de lunettes (1), une paire de tempe gauche et droite (3) et une paire d'éléments de fixation de tempe (2), **caractérisées en ce que** chacun desdits éléments de fixation de tempe (2) est d'une forme généralement en V, une partie (2a) de la forme en V étant attachée fixement au corps principal (1) des lunettes, et l'autre partie (2b) de la forme en V étant attachée à une extrémité d'une tempe associée (3), l'autre partie (2b) de la forme en V pouvant basculer relativement à une partie (2a) dans une direction sensiblement horizontale vers l'avant du corps principal (1) des lunettes.

**2.** Lunettes selon la revendication 1, où lesdits éléments d'attachement de tempe (2) sont prévus respectivement sur une surface frontale supérieure de chacune des portions latérales gauche et droite du corps principal (1).

**3.** Lunettes selon la revendication 1 ou la revendication 2, où ledit corps principal (1) des lunettes a une structure à verre unique.

**4.** Lunettes selon l'une des revendications 1 à 3, où ladite autre partie (2b) de chaque élément d'attachement de tempe (2) présente un crochet (15) pour l'accrochage au corps principal (1) des lunettes, en empêchant ainsi que ladite autre partie (2b) soit ouverte au-delà d'un certain niveau.

FIG. 1

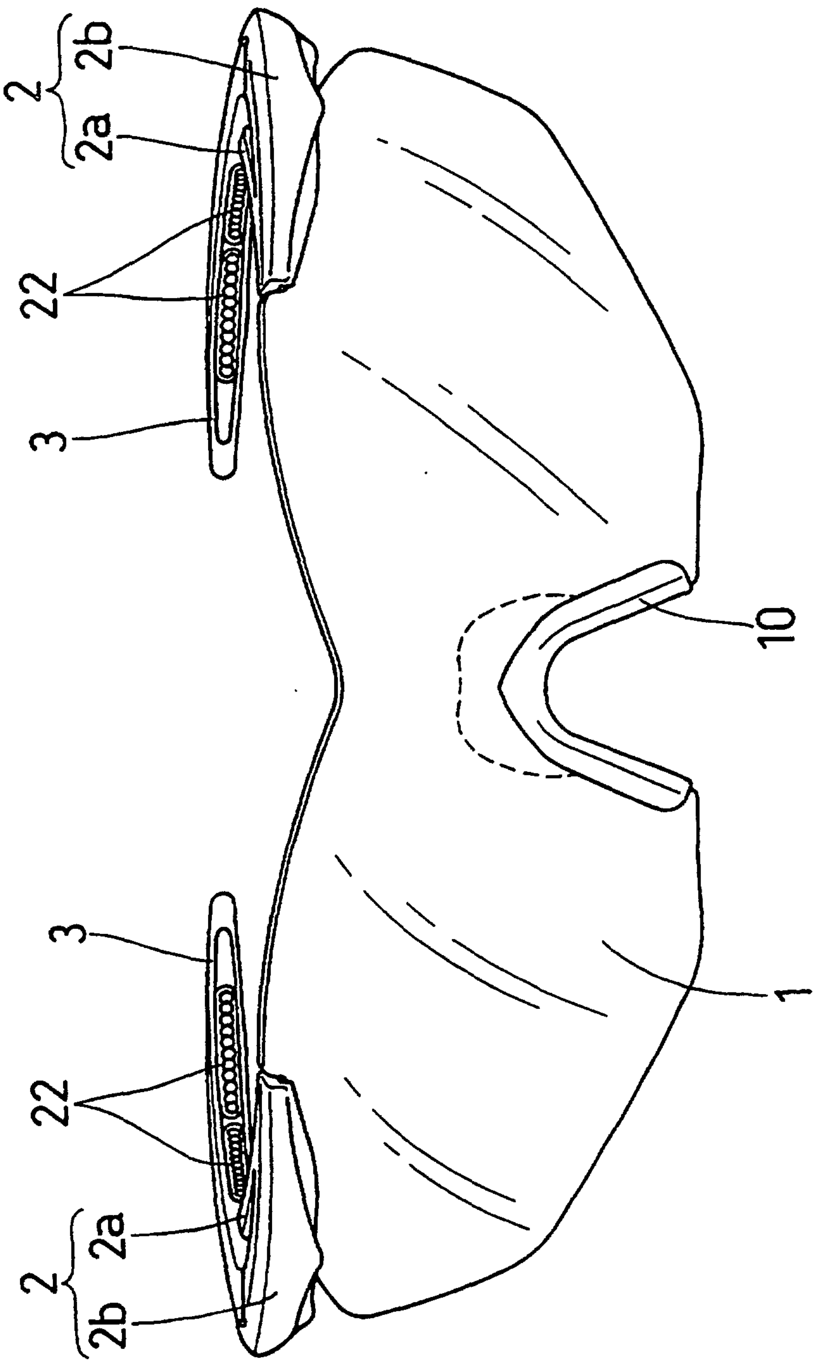

FIG. 2

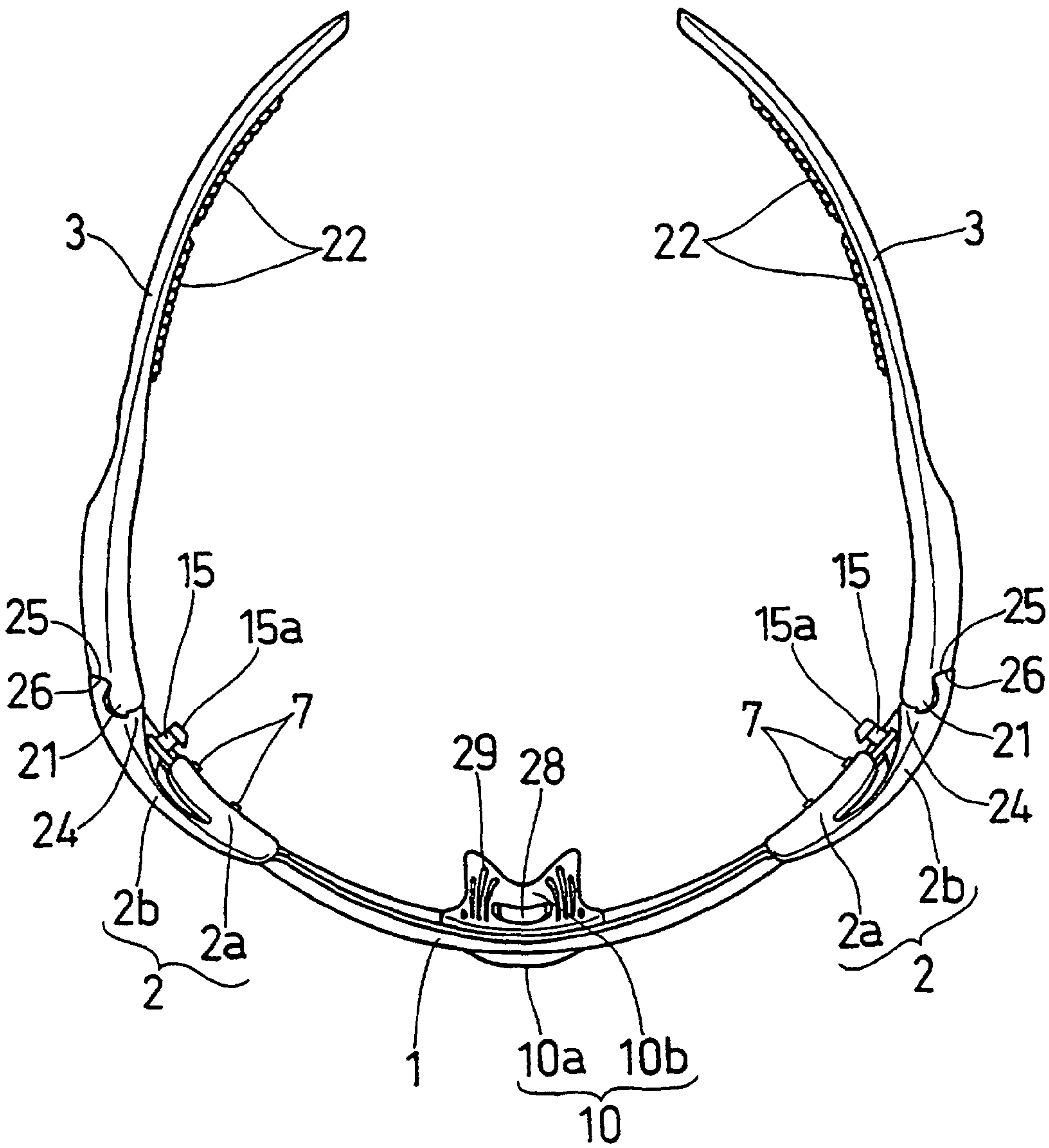

FIG. 3

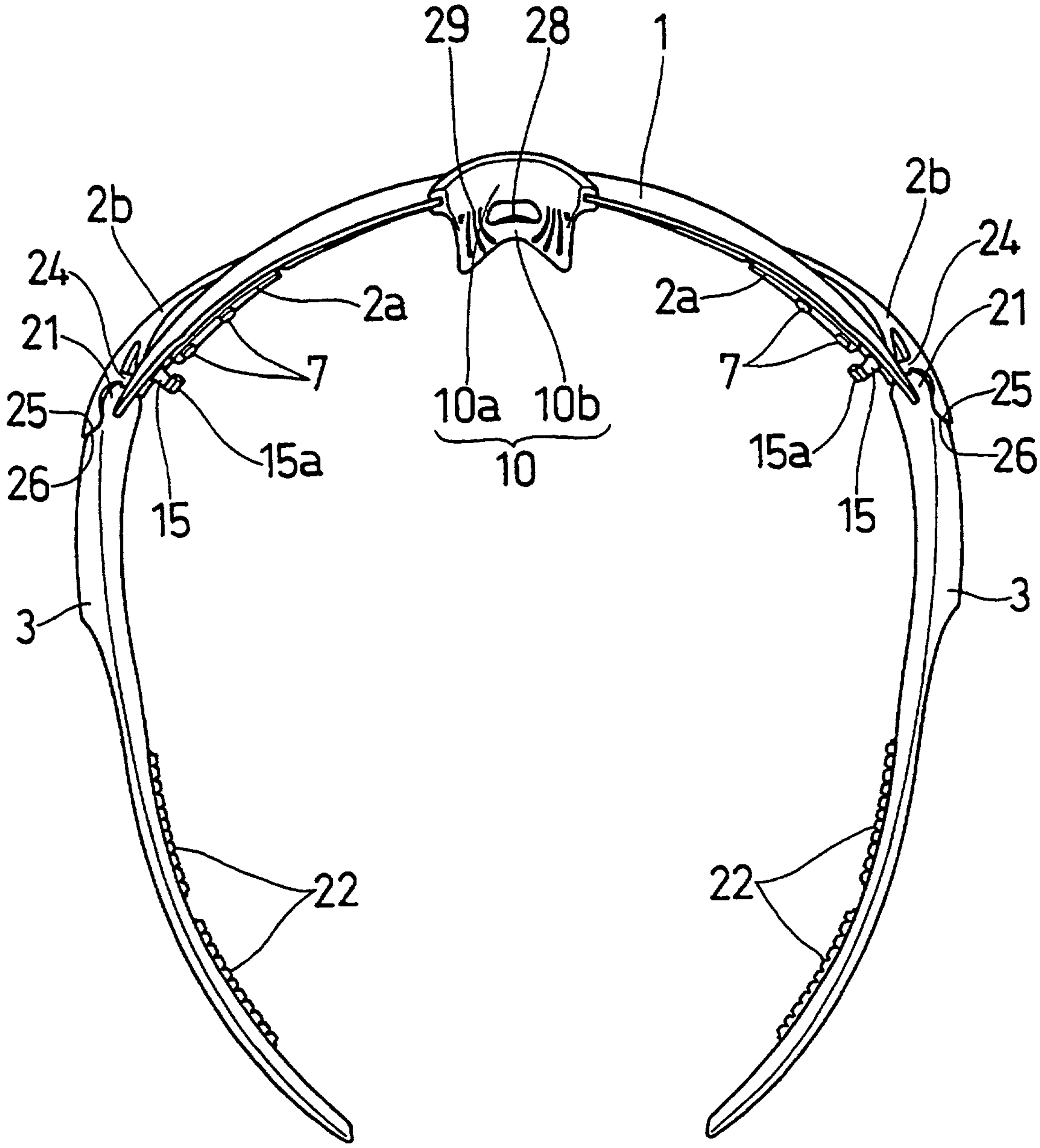

FIG. 4

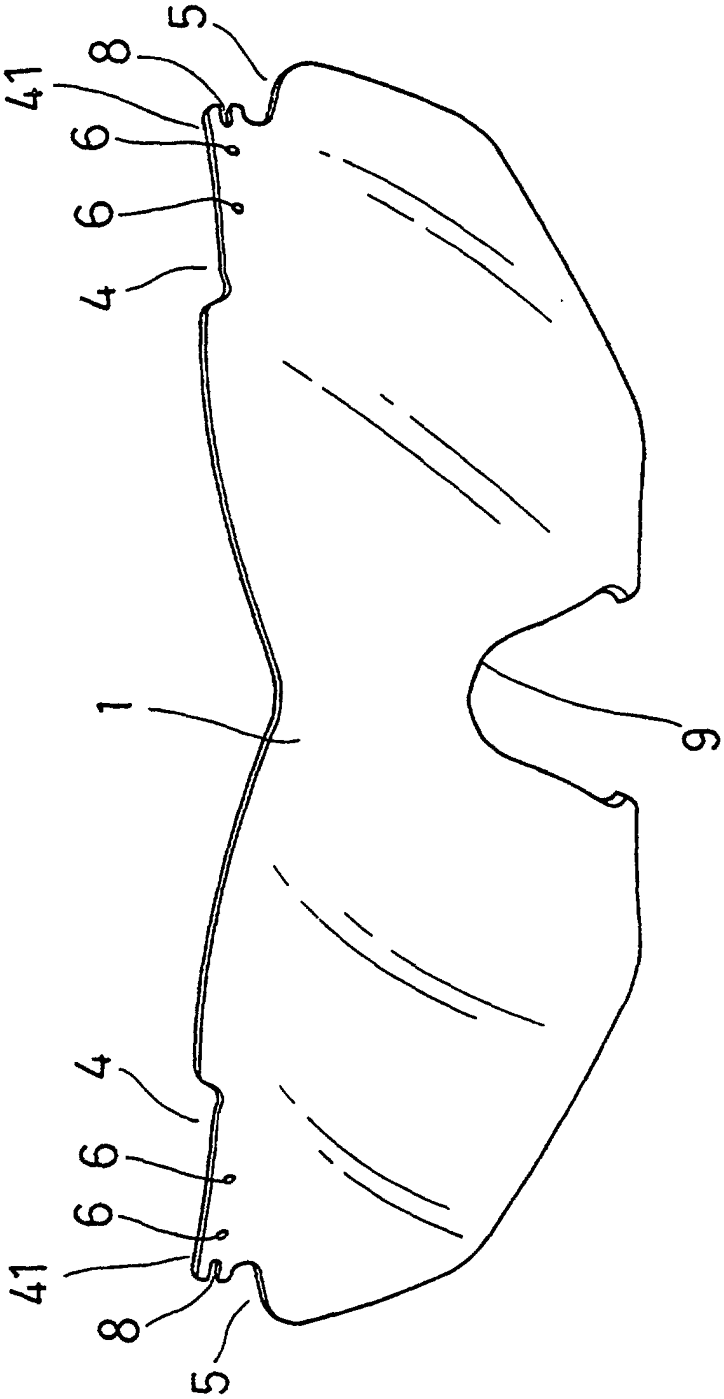

FIG. 5

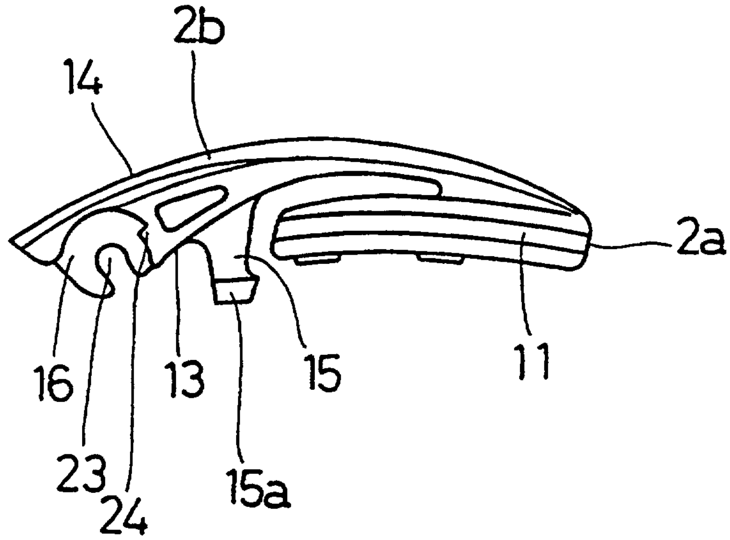

FIG. 6

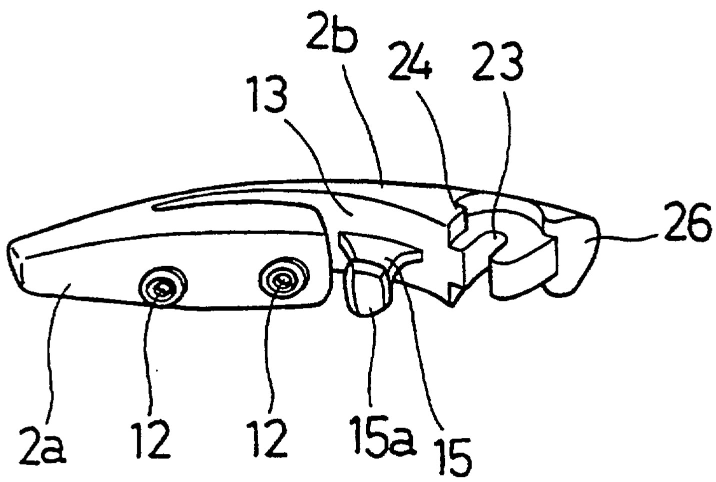

FIG. 7

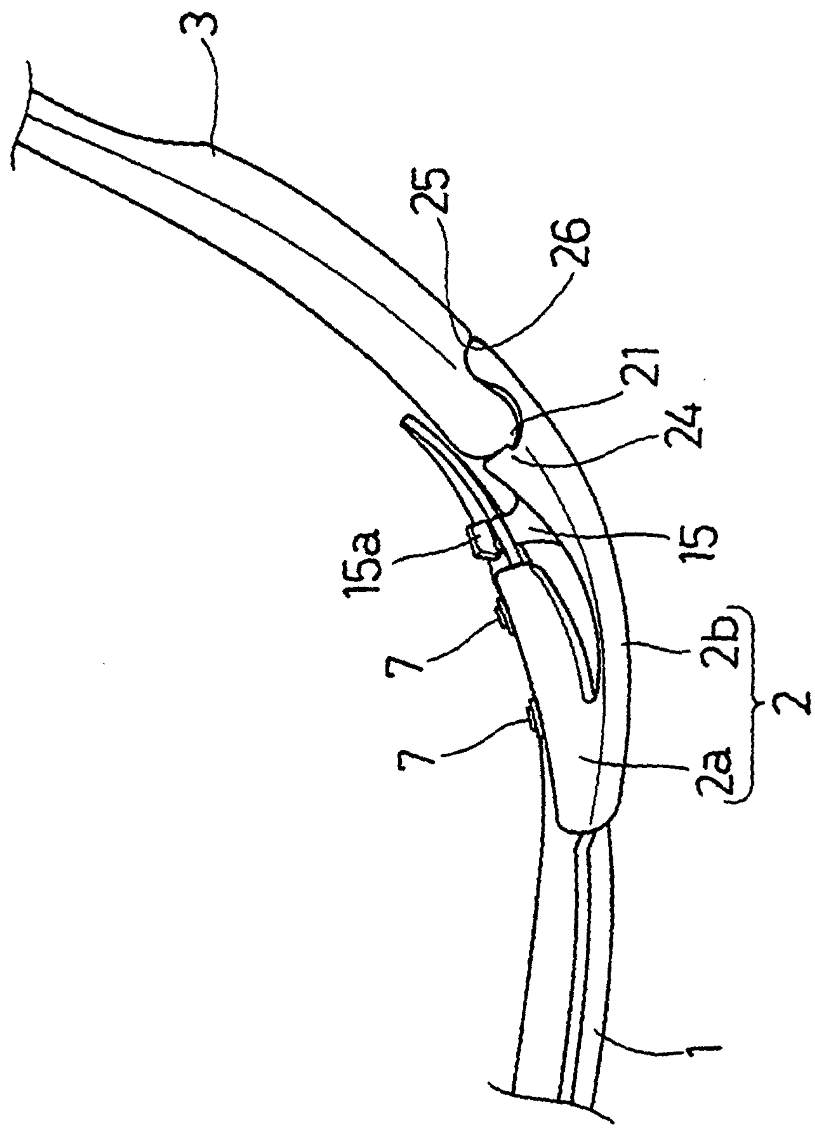

FIG. 8

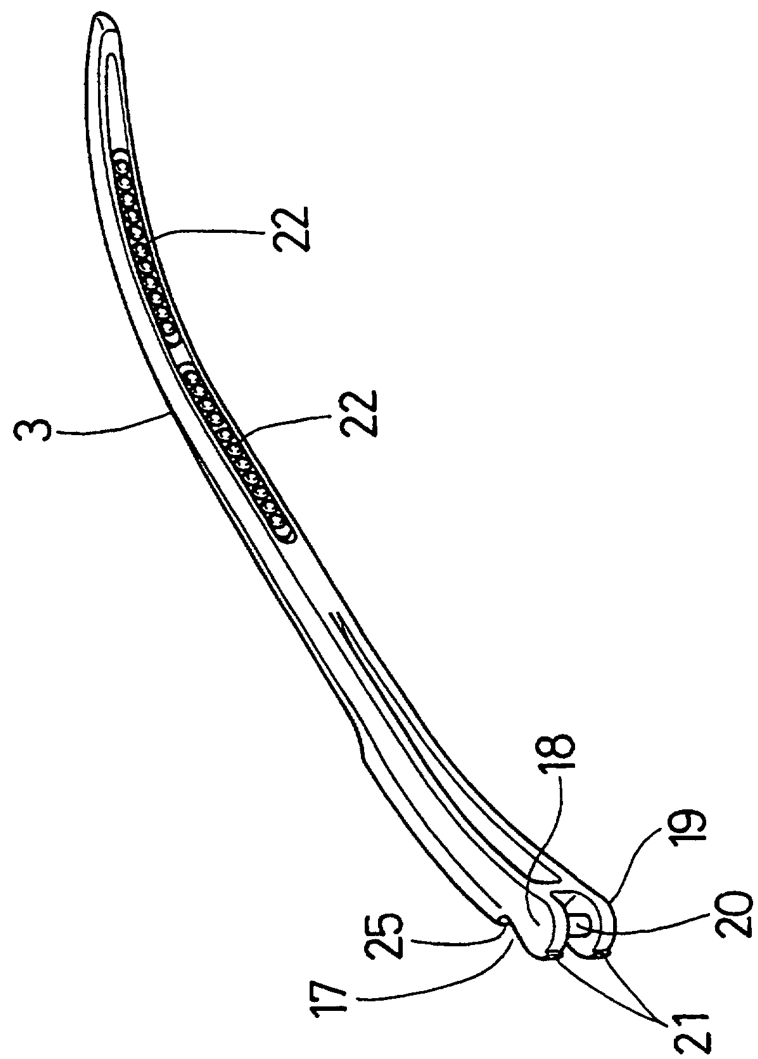

FIG. 9

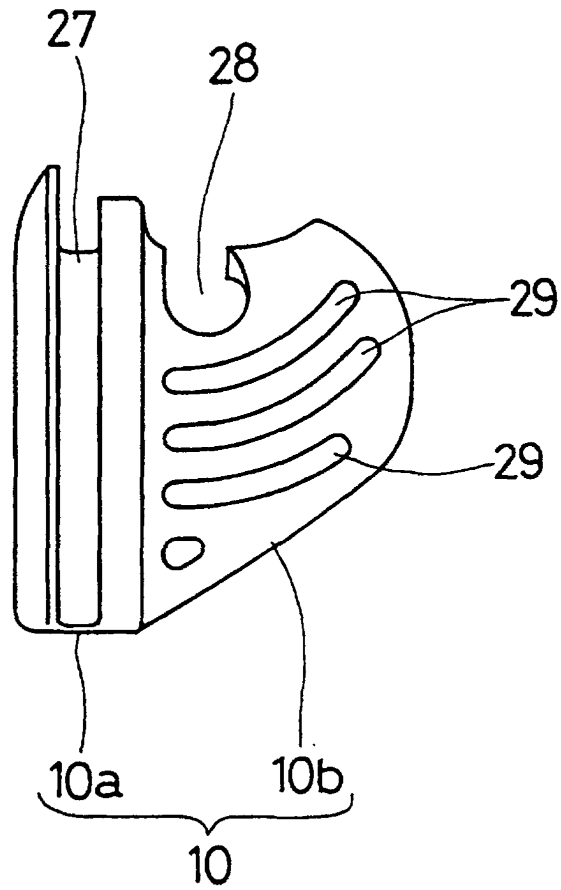

FIG. 10
PRIOR ART

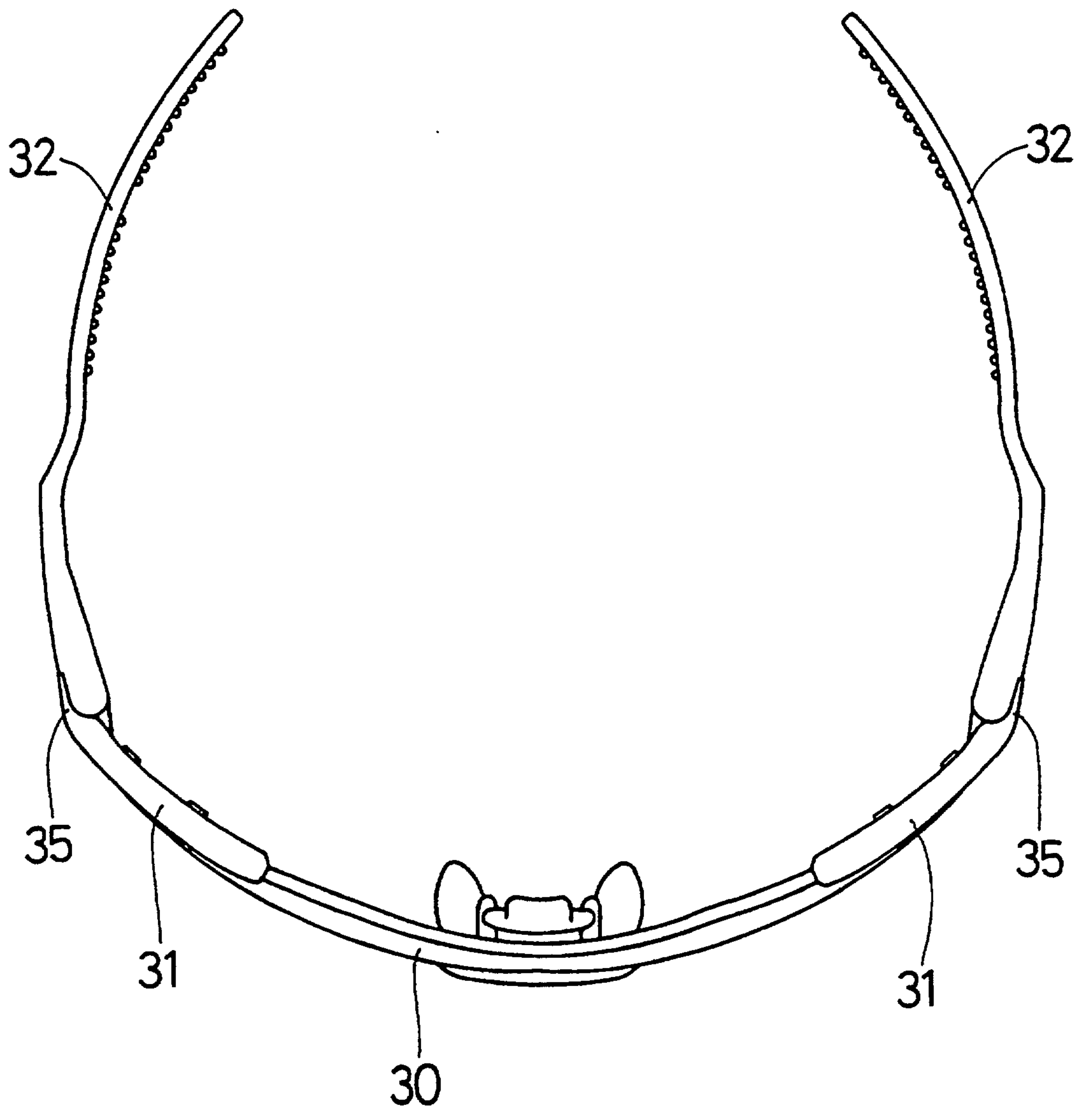

FIG. 11

PRIOR ART